# EUROPEAN PATENT SPECIFICATION

(11) **EP 2 573 418 B1**
(45) Date of publication and mention of the grant of the patent: **05.10.2016**
(21) Application number: 12171548.6
(22) Date of filing: 11.06.2012
(51) Int. Cl.: F16D 65/18, F16H 25/20

(54) **Actuator system and method**
Aktuatorsystem und -verfahren
Système et procédé d'actionneur

(30) Priority: 20.09.2011 US 201113237788
(43) Date of publication of application: 27.03.2013
(73) Proprietor: Goodrich Corporation, Charlotte, NC 28217 (US)
(72) Inventor: Cahill, Eric D, Troy, OH Ohio 45373 (US); Drennen, David Bernard, Bell Brook, OH Ohio 45305 (US); Klode, Harold, Centerville, OH Ohio 45458 (US); Rehfus, Kevin, Troy, OH Ohio 45373 (US)
(74) Representative: Hall, Matthew Benjamin

(56) References cited:
- EP-A2- 0 074 922
- DE-A1-102008 014 995
- DE-A1-102008 062 180
- DE-A1-102009 036 824
- US-B1- 6 405 836

## Description

### FIELD

The present disclosure is related to a ballscrew assembly for use in an aircraft brake, for example.

### BACKGROUND

Aircraft brakes often include a ballscrew. A ballscrew typically converts rotational motion into translating motion by driving a translating ballnut. The ballscrew and ballnut together may be referred to as a ballscrew assembly. In an aircraft brake, the ballnut may (either directly or through other components) drive a brake stack into frictional engagement. The rotational motion that drives a ballscrew may be created by a variety of devices, such as an electric actuator.

Ballscrew assemblies typically have a "home" position as between the ballscrew and ballnut. Commanding rotation of the ballscrew may be performed in accordance with the relative distance to the home position. Depending on operating conditions, a ballscrew assembly may experience a forceful (or "hard") retraction. In other words, the ballscrew assembly may be driven so forcefully that the home position is exceeded and excess force is absorbed by the ballscrew, the ballnut, or both. During exceptionally hard retractions, the ballscrew, ballnut, or both may fail, potentially reducing the ballscrew assembly's effectiveness and causing debris to separate from the ballscrew assembly. An improved ballscrew would be advantageous.

EP 0074922 A2 discloses a device for limiting the angle of rotation in screw transmissions. US 6405836 B1 discloses an actuating unit for an electromechanically operable disc brake. DE 102009036824 A2 discloses a method for producing a threaded nut of a screw drive, in particular of a ball screw. DE 10 2008 014 995 A1 discloses a screw which has a spindle nut arranged at a threaded spindle and supported by balls. DE 10 2008 062 180 A1 discloses a brake which has a two-stage transmission for converting rotation of an actuator into translation movement and actuating a brake piston.

### SUMMARY

Systems and methods disclosed herein may be useful for use in a ballscrew assembly. In this regard, a ballscrew assembly is provided comprising a ballscrew having a ballscrew stop, a ballnut having a ballnut stop, wherein contact between the ballnut stop and the ballscrew stop impede rotation of the ballscrew relative to the ballnut. In various embodiments, the ballnut stop comprises an axial facing mating surface and the ballscrew stop comprises an axial mating surface. Additionally, the ballnut may comprise threads axially spaced a first distance apart and the ballnut stop may comprise a surface having length equal to the first distance.

The ballnut stop may comprise an inclined plane. The ratcheting device may comprise a spring. The ballscrew stop may comprise a rough surface. The ballnut stop may comprise a receiving space.

### BRIEF DESCRIPTION OF THE DRAWINGS

FIG. 1 illustrates a cross section of a ballnut assembly having a partially removed ballnut, in accordance with various embodiments;
FIG. 2 illustrates a cross section of ballnut, in accordance with various embodiments;
FIG. 3 illustrates a cross section of a ballscrew, in accordance with various embodiments;
FIG. 4 illustrates a ballscrew assembly having a ballscrew stop and a ballnut stop mated together, in accordance with various embodiments;
FIG. 5 illustrates a two dimensional view of a self decommissioning ballscrew assembly, in accordance with various embodiments.
FIG. 6 illustrates a ballscrew assembly having an inclined plane ballnut and ballscrew stops;
FIG. 7 illustrates a ballscrew assembly having a ratcheting retainer;
FIG. 8 illustrates a ballscrew, in accordance with various embodiments;
FIG. 9 illustrates an additional view of the ballscrew shown in FIG. 8, in accordance with various embodiments;
FIG. 10 illustrates a ballscrew assembly with the ballnut partially cut away, in accordance with various embodiments;
FIG. 11 illustrates a ballscrew assembly with a portion of the ballnut cut away, in accordance with various embodiments;
FIG. 12 illustrates an additional view of a ballscrew assembly with a portion of the ballnut cut away, in accordance with various embodiments; and
FIG. 13 illustrates a ballnut, in accordance with various embodiments.

### DETAILED DESCRIPTION

The detailed description of exemplary embodiments herein makes reference to the accompanying drawings, which show exemplary embodiments by way of illustration and its best mode. While these exemplary embodiments are described in sufficient detail to enable those skilled in the art to practice the inventions, it should be understood that other embodiments may be realized and that logical, chemical and mechanical changes may be made without departing from the scope of the inventions. Thus, the detailed description herein is presented for purposes of illustration only and not of limitation. For example, the steps recited in any of the method or process descriptions may be executed in any order and are not necessarily limited to the order presented. Moreover, many of the functions or steps may be outsourced to or performed by one or more third parties. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

Systems and methods disclosed herein may be useful for ballscrew assemblies. Although the embodiments herein are described with reference to ballscrew assemblies used in connection with aircraft brakes, such embodiments are provided for example only as it is contemplated that the disclosures herein have applicability to other vehicles, such as automobiles.

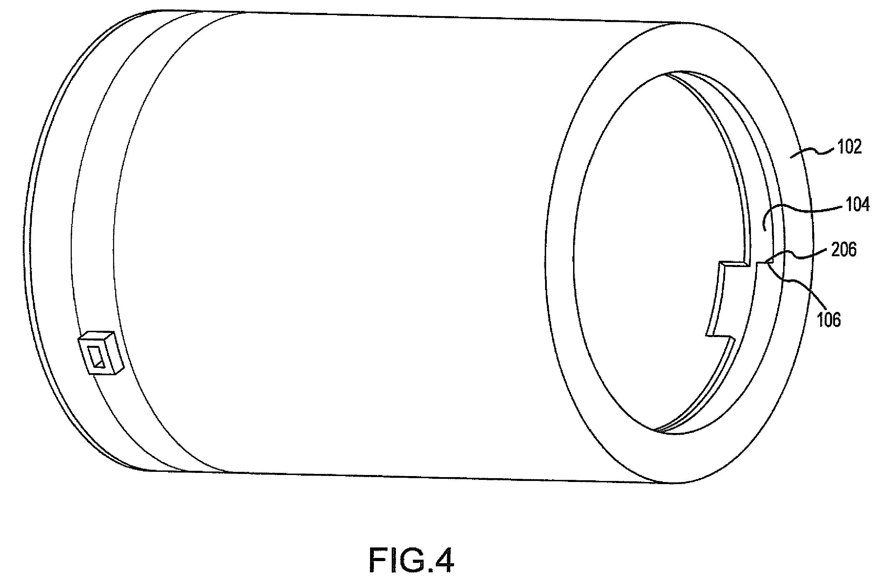

As described above, a ballscrew assembly may convert rotational motion of a ballscrew into translating motion by a ballnut. The ballscrew and ballnut may be substantially cylindrical in shape, and may be configured so that the ballnut has a diameter greater than the ballscrew, although in various embodiments the ballscrew has a greater diameter than the ballnut. The ballscrew may be nested within (or partially within) a space defined by the ballnut. For example, with momentary reference to FIG. 4, ballscrew 104 is mated within ballnut 102. However, in various embodiments, a ballnut may be mated within (or partially within) a ballscrew. In various embodiments, a ballscrew and a ballnut may be physically mated through male threads and corresponding female threads. For example, ballscrew 104 has male threads that mate with female threads on ballnut 102.

The ballscrew assembly may have a home position that comprises a known spatial relationship between the ballnut and the ballscrew. In various embodiments, the home position comprises the fully retracted state of the ballscrew assembly, although in other embodiments the fully retracted state of the ballscrew assembly may not be equal to the home position. The fully retracted state of a ballscrew assembly may be the state where further retraction of the ballnut is not possible without incurring potentially damaging effects.

As discussed above, if the ballscrew assembly experiences a hard retraction, the ballscrew and ballnut may be driven beyond the home position, which may cause undesired results. Thus, in accordance with various embodiments, a ballscrew may comprise a ballscrew stop and a ballnut may comprise a ballnut stop.

A ballscrew stop may comprise a surface or feature of a ballscrew (or a component attached to the ballscrew) to at least partially absorb, withstand, and/or resist the ballnut from further retracting beyond the home position. Stated another way, the ballscrew stop acts to resist retraction beyond the home position. The ballscrew stop may be integral to the ballscrew or may be a component attached to the ballscrew. The ballscrew stop may also comprise multiple components. In various embodiments, the ballscrew stop mates with a ballnut stop. A ballscrew stop may be a primary ballscrew stop. A primary ballscrew stop may be positioned at or near the home position of a ballscrew assembly.

A ballnut stop may comprise a surface or feature of a ballnut (or a component attached to the ballnut) to at least partially absorb, withstand, and/or resist the ballscrew from passing beyond the home position. Stated another way, the ballnut stop acts to resist retraction beyond the home position. The ballnut stop may be integral to the ballnut or may be a component attached to the ballnut. The ballnut stop may also comprise multiple components. A ballnut stop may be a primary ballnut stop. A primary ballnut stop may be positioned at or near the home position of a ballnut assembly.

In various embodiments, the ballscrew assembly may be self-decommissioning in that, in response to a hard retraction, the ballscrew stop and ballnut stop may bind, retain, and/or destroy one and/or another, causing the ballscrew assembly to require repair or replacement. In such embodiments, self-decommissioning ballscrew assemblies tend to prevent damaged ballscrew assemblies from being used, thus enhancing safety. In various embodiments, the ballscrew assembly is not self-decommissioning. However, in other embodiments, the ballscrew stop is self-decommissioning only if forced beyond a point of no return by, for example, a hard retraction. A point of no return may be a point of rotation beyond the home position of the ballscrew assembly.

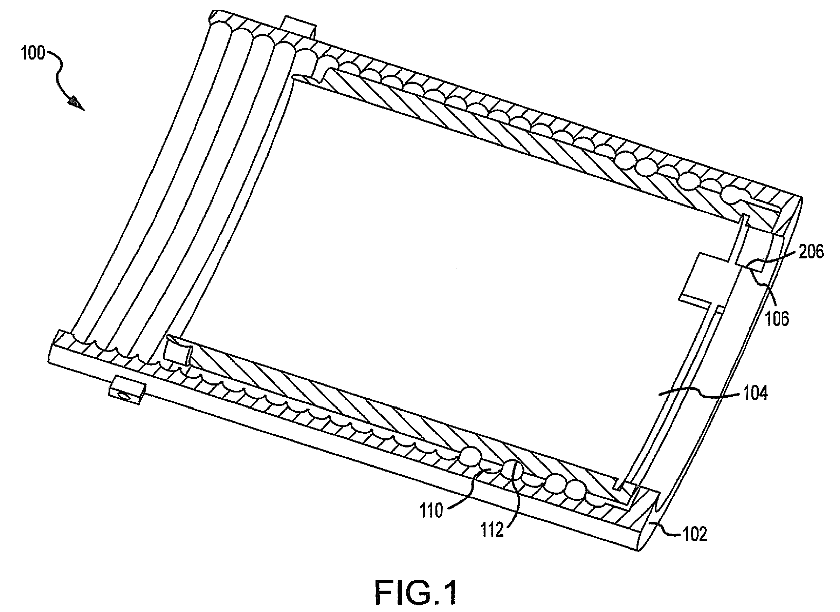

With reference now to FIG. 1, ballscrew assembly 100 is illustrated. Ballscrew assembly 100 comprises ballnut 102 and ballscrew 104. Ballscrew 104 is illustrated to be at least partially within ballnut 102. Rotation of ballscrew 104 may urge ballnut 102 to translate axially, driven by ballnut threads 110 and ballscrew threads 112. Ballnut threads 110 may be either male or female, and ballscrew threads 112 may be configured to mate with ballnut threads 110. Likewise, translation of ballnut 102 may urge ballscrew 104 to translate, driven by ballnut threads 110 and ballscrew threads 112.

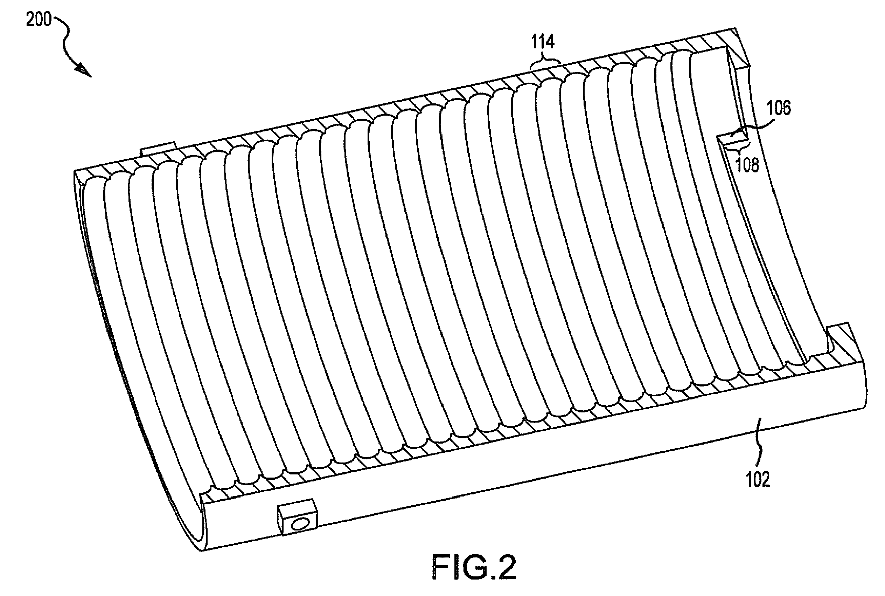

Ballnut threads 110 are axially spaced a certain distance apart. For example, ballnut threads 110 are spaced distance 114 apart, as shown in Figure 2. Ballnut threads 110 may be spaced apart equally across ballnut 102. Ballscrew threads 112 are similarly axially spaced a certain distance apart. Ballscrew threads 112 may be spaced apart equally across ballscrew. For example, ballscrew threads 112 are spaced a distance equal to distance 114 apart.

Primary ballnut stop 106 is illustrated to be in contact with primary ballscrew stop 206. In this embodiment, primary ballnut stop 106 and primary ballscrew stop 206 are illustrated in a home position. Thus, ballscrew assembly 100 is fully retracted when in the home position. However, in various embodiments, ballscrew assembly 100 may be in a home position when primary ballnut stop 106 and primary ballscrew stop 206 are not in contact.

Primary ballnut stop 106 is integral to ballnut 102. Primary ballscrew stop 206 is integral to ballscrew 104. Such construction may be exceptionally durable as it takes advantage of the hoop strength of the ballnut and ballscrew. Durability is beneficial, as less durable ballscrew assemblies may crack or otherwise come apart during a hard retraction. Ballnut 102 and ballscrew 104 may be made of any suitable material, including hard materials such as steel (e.g., hardened steel). In various embodiments, however, the ballnut stop and ballscrew stop may be separate components that are attached to the ballnut or ballscrew, respectively.

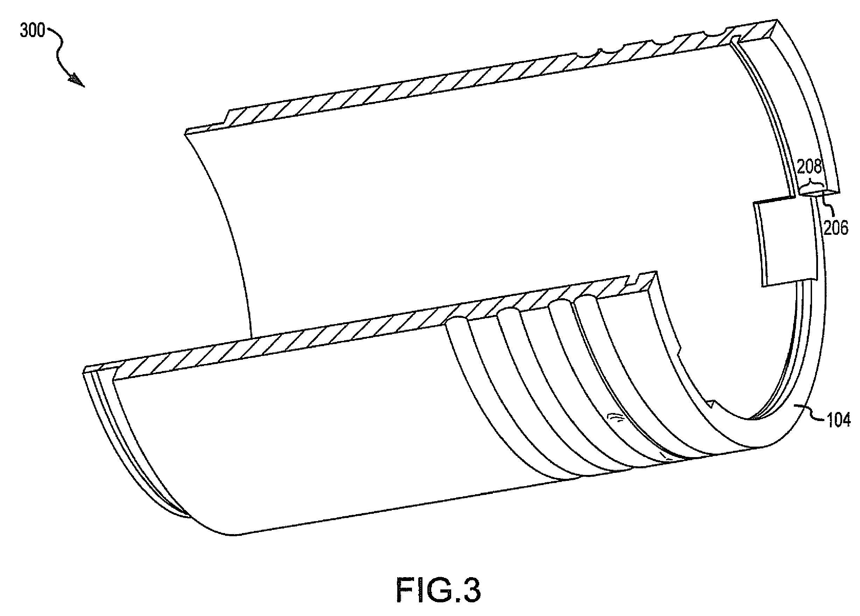

Primary ballnut stop 106 and primary ballscrew stop 206 each have an axial mating surface. Primary ballnut stop 106 has axial mating surface 108, as shown in FIG. 2. Primary ballscrew stop 206 has axial mating surface 208, as shown in FIG. 3. Axial mating surface 108 and axial mating surface 208 come into at least partial contact with one another in the home position and, during a hard retraction, would interact with one another during the force transfer between ballnut 102 and ballscrew 104. During a hard retraction, primary ballnut stop 106 and primary ballscrew stop 206 resist one another and absorb the force of the hard retraction.

Axial mating surface 108 and axial mating surface 208 each have dimension that extends in the axial direction. As used herein, this axial dimension may be called the height of primary ballnut stop 106 and primary ballscrew stop 206. The height of primary ballnut stop 106 and primary ballscrew stop 206 may be equal to that of the distance of the spacing of the ballscrew threads and the ballnut threads. For example, ballnut threads 110 are spaced distance 114 apart. The height of primary ballnut stop 106 is also distance 114, as is the height of primary ballscrew stop 206. Such configuration provides enhanced strength to better withstand a hard retraction.

As described above, a self decommissioning ballscrew assembly enhances safety by preventing reuse of a potentially damaged ballscrew assembly after a hard retraction. In various embodiments, a self decommissioning ballscrew assembly and a partially self decommissioning ballscrew assembly is contemplated.

A self decommissioning ballscrew assembly may comprise a secondary ballscrew stop and/or a secondary ballnut stop. If a primary ballscrew stop and/or a primary ballnut stop fails, the secondary ballscrew stop and/or a secondary ballnut stop may act to resist or stop ballscrew assembly rotation and may also decommission the ballscrew assembly.

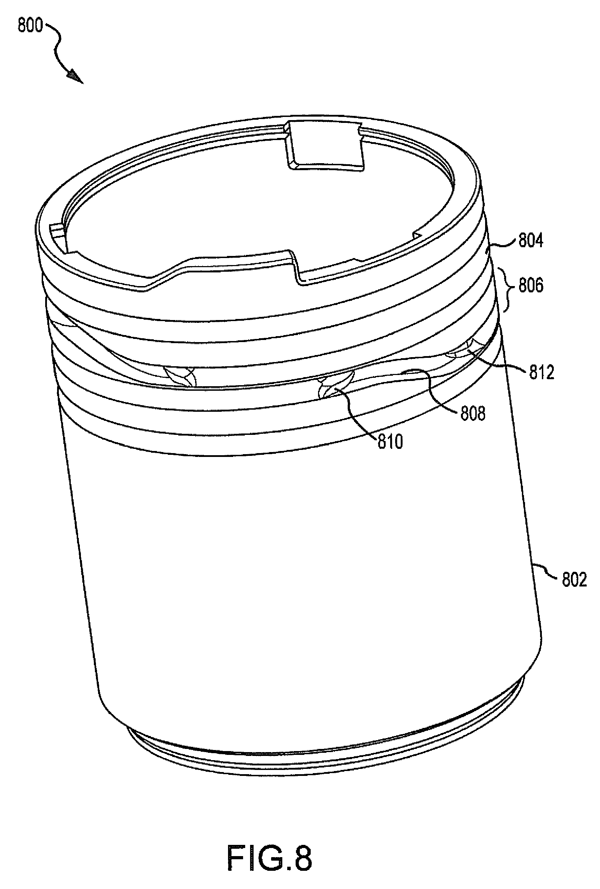

With reference to FIG. 8, ballscrew 800 illustrates ballscrew 802 having a secondary ballscrew stop. In various embodiments, ballscrew 802 has a secondary ballscrew stop that comprises axial facing mating 810, track 808, and axial facing mating 812. Axial facing mating 812 and axial facing mating 810 may be separated by an axial distance 806. Ballscrew 802 may also have threads 804 for mating with a ballnut, thus enabling rotation/translation functionality described above.

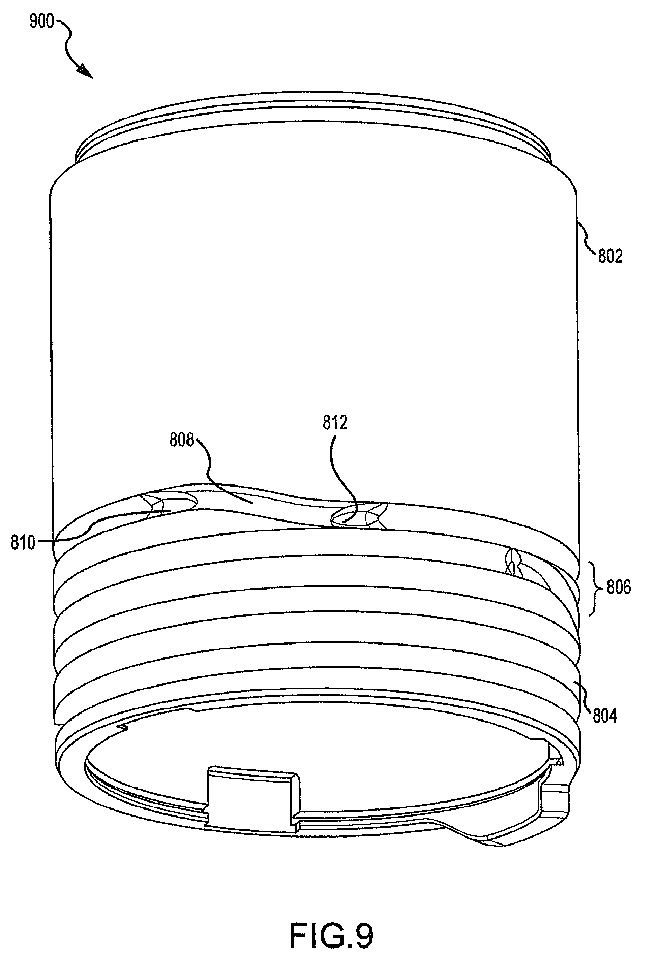

With reference to FIG. 9, ballscrew 900 illustrates an additional view of ballscrew 802 having a secondary ballscrew stop. Axial facing mating 810 and axial facing mating 812 may comprise material that extends in a radial direction, thus providing a locking surface to bind a ballnut.

In response to primary ballnut stop and/or ballscrew stop failure, a ballnut may encounter the secondary ballscrew stop. The axial facing mating 810, track 808, and axial facing mating 812 may act to wedge, bind or otherwise lock the ballnut together with the ballscrew.

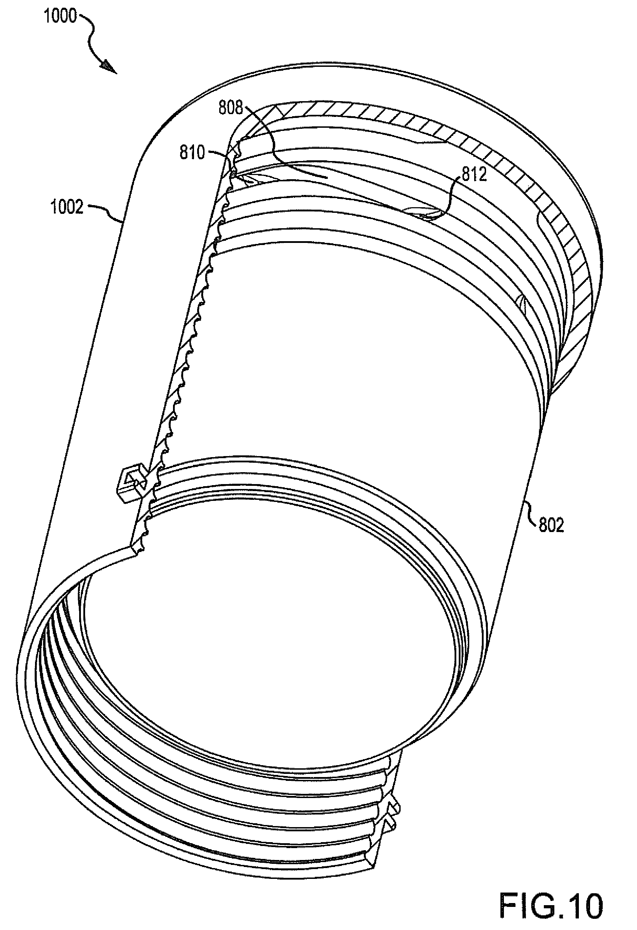

For example, FIG. 10 illustrates a ballscrew assembly 1000. Ballnut 1002 is shown partially cut away. Ballscrew 802 has axial facing mating 810, track 808, and axial facing mating 812. Ballnut 1002 is disposed in thread engagement with ballscrew 802. In response to engagement with the secondary ballscrew stop (axial facing mating 810, track 808, and axial facing mating 812), ballnut 1002 will lock with ballscrew 802, prohibiting rotation of the ballscrew assembly and thus decommissioning the ballscrew assembly.

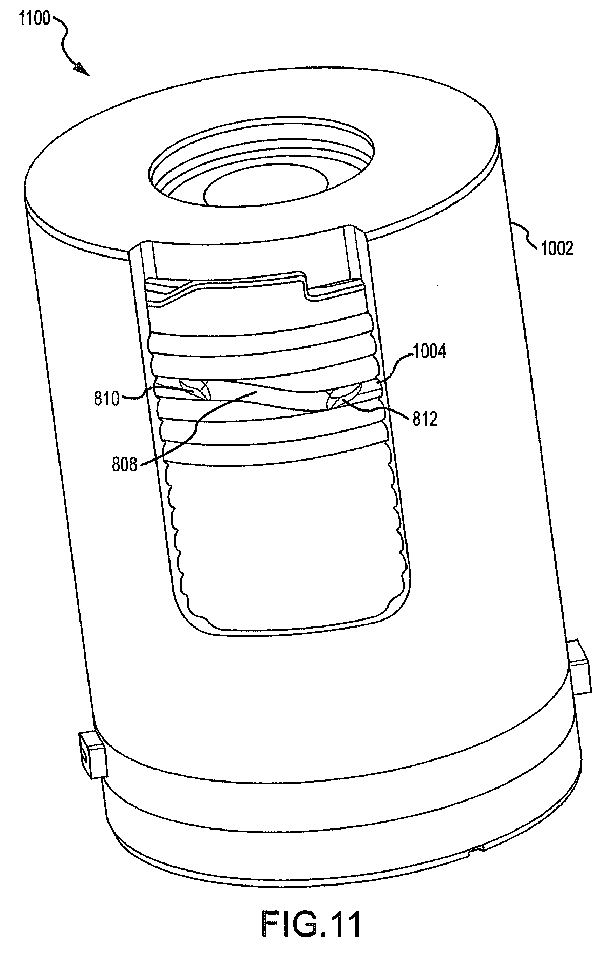

With reference to FIG. 11, an additional view 1100 of a ballscrew assembly 1000 is shown. Ballnut 1002 is shown partially cut away. Ballscrew 802's secondary ballscrew stop (comprising axial facing mating 810, track 808, and axial facing mating 812) is also shown. Ballnut thread 1004 is shown near axial facing mating 812.

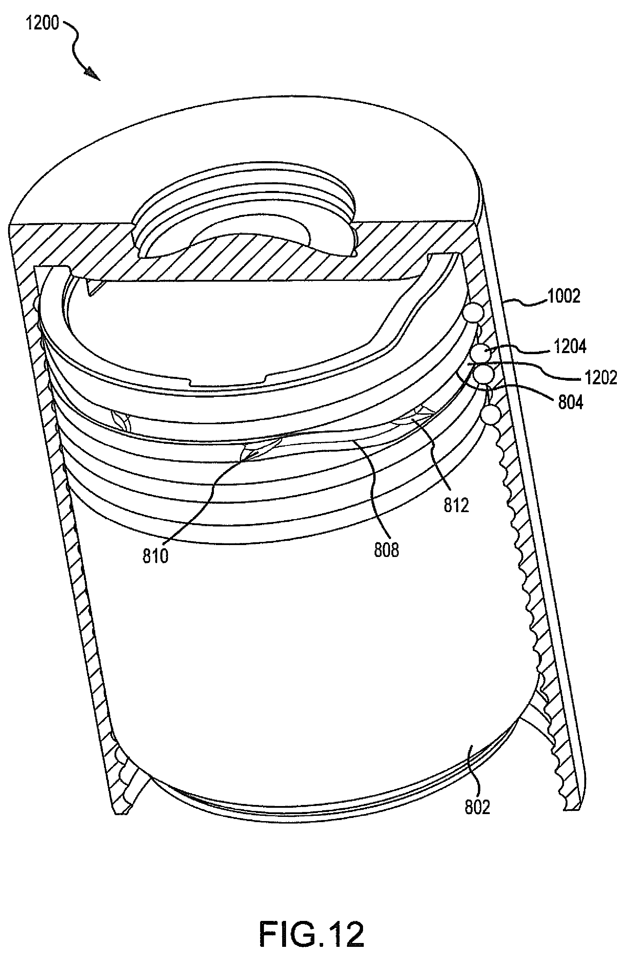

With reference to FIG. 12, an additional view 1200 of a ballscrew assembly 1000 is shown. Ballnut 1002 is shown partially cut away. Ballscrew 802's secondary ballscrew stop (comprising axial facing mating 810, track 808, and axial facing mating 812) is also shown. Ballnut thread 1004 is shown near axial facing mating 812. Ballnut thread 1204 is shown engaged with ballscrew thread 1202. Ballnut thread 1204 may encounter the secondary ballscrew stop and thus be locked or bound with ball screw 802.

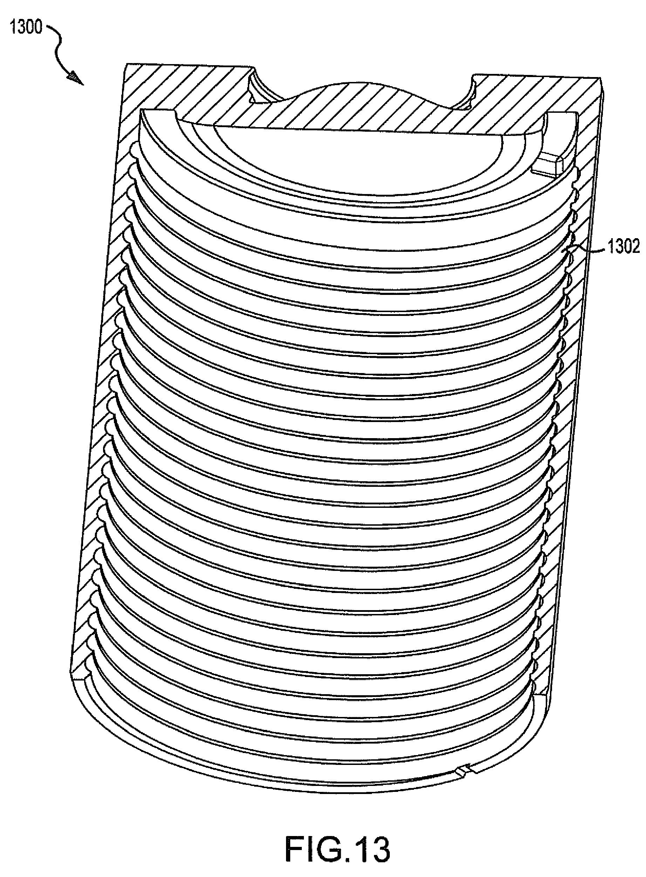

It is contemplated herein that a ballscrew assembly may have a secondary ballscrew stop, a secondary ballnut stop, or both. Thus, a ballnut may have a secondary ballnut stop configured like the secondary ballscrew stop that comprises axial facing mating 810, track 808, and axial facing mating 812. With reference to FIG. 13, ballnut 1302 is shown.

In various embodiments, a ballscrew assembly may comprise a ballnut having a decommissioning wedge and a ballnut locating stop and a ballscrew comprising a ballscrew locating stop. In such embodiments, the ballnut locating stop and the ballscrew locating stop are not in contact in a home position of the ballscrew assembly. However, in response to contact of the ballscrew locating stop with the ballnut locating stop, the decommissioning wedge is actuated. In this manner, decommissioning may be achieved with the decommissioning wedge after the ballscrew locating stop and the ballnut locating stop make contact.

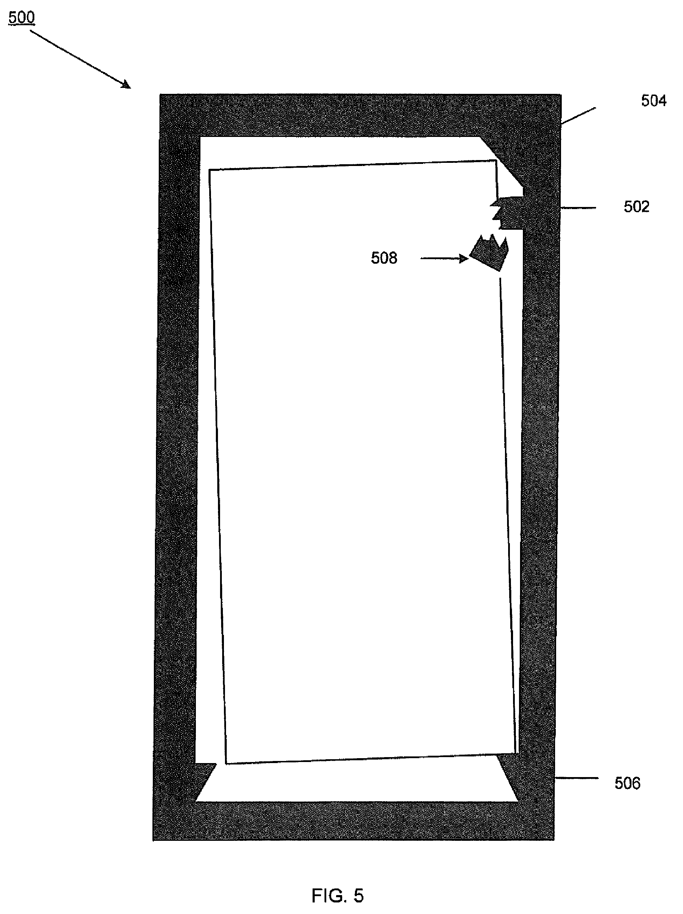

For example, with reference to FIG 5, a two dimensional view of ballscrew assembly 500 is shown. Ballnut locating stop 502 is depicted not in contact with ballscrew locating stop 508. Decommissioning wedge 506 is shown, as is overextension wedge 504.

The home position of ballscrew assembly 500 exists at a relative position of the ballscrew and ballnut where ballnut locating stop 502 is not in contact with ballscrew locating stop 508. Either ballnut locating stop 502, ballscrew locating stop 508, or both may have an actuation system. The actuation system is triggered upon contact between ballnut locating stop 502 and ballscrew locating stop 508. In response to contact between ballnut locating stop 502 and ballscrew locating stop 508, the actuation system may actuate decommissioning wedge 506. The actuation system may comprise a spring, for example. Decommissioning wedge 506 acts to decommission ballscrew assembly 500, making it difficult or impossible for the ballnut and ballscrew to rotate with respect to each other. A sensor or other device may be suitably configured to monitor for the actuation of the actuation system and alert other aircraft components to the decommissioned status of the actuator.

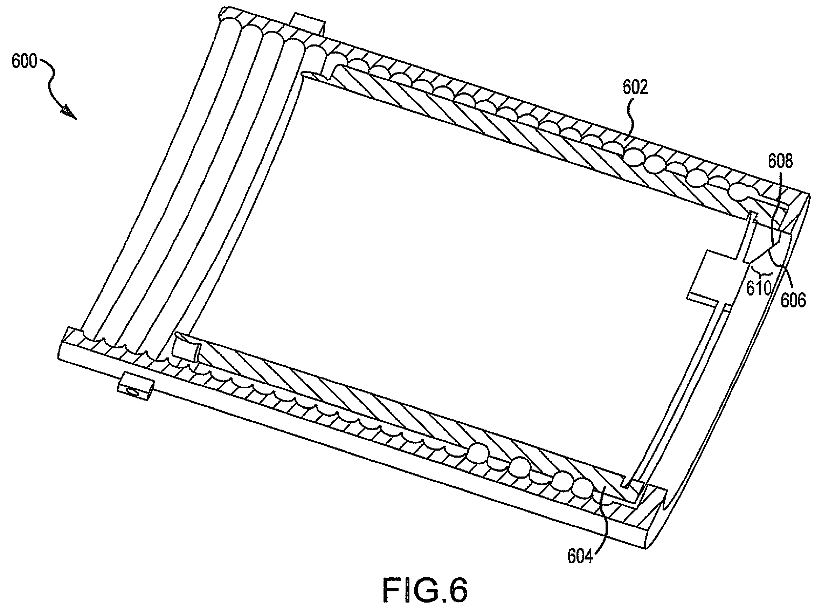

In various embodiments, a ballnut stop and ballscrew stop may comprise corresponding inclined planes. For example, as shown in FIG. 6, ballscrew assembly 600 is shown. Ballscrew 604 is shown within ballnut 602. Ballnut stop 606 is shown in contact with ballscrew stop 608. Both ballnut stop 606 and ballscrew stop 608 comprise corresponding inclined planes. The height 610 of ballnut stop 606 is the same height as the distance between the threads of ballnut 602. Ballnut stop 606 and ballscrew stop 608 further comprise mating surfaces that mate together when ballscrew assembly 600 is at full retraction. The mating surfaces of the ballnut stop and ballscrew stop may be smooth or may be rough. For example, the mating surfaces of the ballnut stop and ballscrew stop may comprise a coating to create a rough exterior or may be sanded or etched to create a rough exterior. In various embodiments, a deformable material may be used as a coating. In such embodiments, during a hard retraction, the deformable material would deform and aid in the binding of the ballnut and the ballscrew. For example, suitable deformable material coatings may include polymeric materials. In various embodiments, hard surfaces may be selected. For example, copper plating may be used on the mating surfaces. Both ballnut stop 606 and ballscrew stop 608 are integral to ballnut 602 and ballscrew 604, respectively.

In various embodiments, a self-decommissioning function may be implemented using a change in mating surface geometry. Stated another way, the geometry of the mating surfaces of the ballnut and ballscrew may take one form during normal use (e.g., a threaded groove) and a different form at a ballnut stop and/or ballscrew stop. Such a geometry change may effect binding between the ballnut and ballscrew, and thus achieve the self-decommissioning function. For example, at a ballnut stop and/or ballscrew stop, the threads of the ballnut and/or ballscrew may be square shaped. In addition, at a ballnut stop and/or ballscrew stop, the thread pitch may be altered or a double thread may be used. In such embodiments, the change in mating surface geometry may disrupt the relative motion of the ballnut and ballscrew, thus stopping the motion. For example, a change in mating surface geometry may force a change in the axis of the ballnut and/or ballscrew, impeding relative motion between the ballnut and ballscrew.

In various embodiments, either a ballnut stop or a ballnut may comprise a ratcheting retainer. A ratcheting retainer may be any member that is mechanically configured to prevent the relative rotation of a ballnut and a ballscrew. A ratcheting retainer may be coupled with a ratcheting device. A ratcheting device may be a device that allows movement in a first direction but not a second direction and/or a device that provides a force responsive to an applied force. A ratcheting device, for example, may comprise a gear and a pawl that retains the gear when mechanically urged in a first direction but allows motion of the gear in a second direction. In various embodiments, a ratcheting device, for example, may comprise a spring. A ratcheting retainer may provide self-decommissioning functionality by allowing displacement of a ballnut stop and/or ballscrew stop and retention of one or more of the ballnut stop and/or the ballscrew stop.

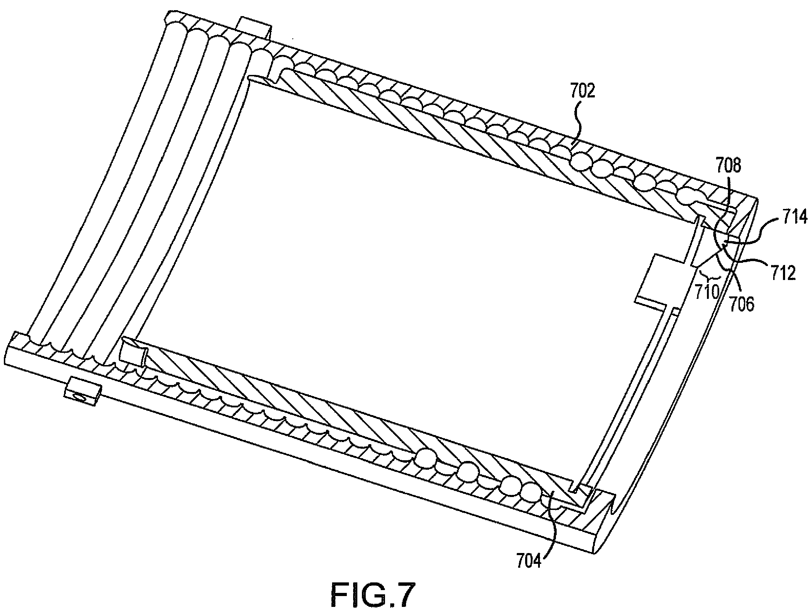

For example, as illustrated in FIG. 7, ballnut stop 706 may comprise a ratcheting retainer 712 that comprises a ratcheting device having a spring. The ratcheting retainer 712 may be forced in an axial direction in response to contact with ballscrew stop 708. The spring of the ratcheting retainer would thus become at least partially compressed due to the applied force. Ballscrew stop 708 may comprise receiving space 714 (e.g., a notch, cut out, or gap), that is configured to receive ratcheting retainer 712. The receiving space 714 may be positioned at a point on ballscrew stop 708 that represents a full retraction between ballnut 702 and ballscrew 704. Thus, when ballscrew 704 and ballnut 702 rotate such that the ratcheting retainer aligns with the receiving space, the spring would act to force the ratcheting retainer into the receiving space. Accordingly, at that time, ratcheting retainer 712 would act to resist the relative rotation of ballnut 702 and ballscrew 704 and the ballscrew assembly would be decommissioned. In various embodiments, the ballnut may comprise the receiving space and the ballscrew may comprise the ratcheting retainer, functioning similar to the above. In addition, distance 710 is the height of the threads of ballnut 702 and ballscrew 704.

Benefits, other advantages, and solutions to problems have been described herein with regard to specific embodiments. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A ballscrew assembly comprising:
a ballscrew (104;802) having a primary ballscrew stop (206) and a secondary ballscrew stop, the secondary ballscrew stop comprising an axial facing mating (810,812); and
a ballnut (802) having a primary ballnut stop (106),
wherein contact between the primary ballnut stop and the primary ballscrew stop impede rotation of the ballscrew relative to the ballnut,
and wherein the axial facing mating of the secondary ballscrew stop engages the ballnut, in response to rotation of the ballnut.

2. The ballscrew assembly of claim 1, wherein the primary ballnut stop (106) comprises an axial mating surface (108) and the primary ballscrew stop (206) comprises an axial mating surface (208).

3. The ballscrew assembly of claim 1, wherein the primary ballscrew stop (206) comprises an inclined plane.

4. The ballscrew assembly of claim 1, wherein the ballnut (102) comprises threads (110) axially spaced a first distance (114) apart and wherein the primary ballnut stop (106) comprises a surface (108) having length equal to the first distance, wherein
optionally:-
the ballscrew (104) comprises threads (112) axially spaced a second distance apart and wherein the primary ballscrew stop (206) comprises a surface (208) having length equal to the second distance.

5. The ballscrew assembly of claim 1, wherein the secondary ballnut stop comprises a track.

6. The ballscrew assembly of claim 3, wherein at least one of:-
a) the primary ballscrew stop (206) comprises a rough surface;
b) the primary ballnut stop (106) comprises a rough surface.

7. The ballscrew assembly of claim 1, wherein the secondary ballscrew stop irreversibly locks with the ballnut.

## Patentansprüche

1. Kugelumlaufspindelanordnung, umfassend:
eine Kugelumlaufspindel (104; 802) mit einem primären Kugelumlaufspindelanschlag (206) und einem sekundären Kugelumlaufspindelanschlag, wobei der sekundäre Kugelumlaufspindelanschlag eine axial zugewandte Paarung (810, 812) umfasst; und
eine Kugelmutter (802) mit einem primären Kugelmutteranschlag (106),
wobei Kontakt zwischen dem primären Kugelmutteranschlag und dem primären Kugelumlaufspindelanschlag die Rotation der Kugelumlaufspindel relativ zur Kugelmutter hemmt,
und wobei die axial zugewandte Paarung des sekundären Kugelumlaufspindelanschlags die Kugelmutter als Reaktion auf die Rotation der Kugelmutter in Eingriff nimmt.

2. Kugelumlaufspindelanordnung nach Anspruch 1, wobei der primäre Kugelmutteranschlag (106) eine axiale Passfläche (108) umfasst und der primäre Kugelumlaufspindelanschlag (206) eine axiale Passfläche (208) umfasst.

3. Kugelumlaufspindelanordnung nach Anspruch 1, wobei der primäre Kugelumlaufspindelanschlag (206) eine geneigte Ebene umfasst.

4. Kugelumlaufspindelanordnung nach Anspruch 1, wobei die Kugelmutter (102) Gewinde (110) umfasst, die in einem ersten Abstand (114) axial beabstandet sind und wobei der primäre Kugelmutteranschlag (106) eine Fläche (108) mit einer Länge gleich dem ersten Abstand umfasst, wobei
optional:
die Kugelumlaufspindel (104) Gewinde (112) umfasst, die in einem zweiten Abstand axial beabstandet sind und wobei der primäre Kugelumlaufspindelanschlag (206) eine Fläche (208) mit einer Länge gleich dem zweiten Abstand umfasst.

5. Kugelumlaufspindelanordnung nach Anspruch 1, wobei der sekundäre Kugelmutteranschlag eine Spur beinhaltet.

6. Kugelumlaufspindelanordnung nach Anspruch 3, wobei mindestens eines von
a) dem primären Kugelumlaufspindelanschlag (206) eine raue Fläche umfasst;
b) dem primären Kugelmutteranschlag (106) eine raue Fläche umfasst.

7. Kugelumlaufspindelanordnung nach Anspruch 1, wobei der sekundäre Kugelumlaufspindelanschlag irreversibel mit der Kugelmutter verriegelt ist.

## Revendications

1. Ensemble de vis à billes comprenant :
une vis à billes (104 ; 802) ayant une butée de vis à billes primaire (206) et une butée de vis à billes secondaire, la butée de vis à billes secondaire comprenant un accouplement de face axial (810, 812) ; et
un écrou à billes (802) ayant une butée d'écrou à billes primaire (106),
dans lequel un contact entre la butée d'écrou à billes primaire et la butée de vis à billes primaire empêche la rotation de la vis à billes par rapport à l'écrou à billes,
et dans lequel l'accouplement de face axial de la butée de vis à billes secondaire se met en prise avec l'écrou à billes, en réponse à la rotation de l'écrou à billes.

2. Ensemble de vis à billes selon la revendication 1, dans lequel la butée d'écrou à billes primaire (106) comprend une surface d'accouplement axial (108) et la butée de vis à billes primaire (206) comprend une surface d'accouplement axial (208).

3. Ensemble de vis à billes selon la revendication 1, dans lequel la butée de vis à billes primaire (206) comprend un plan incliné.

4. Ensemble de vis à billes selon la revendication 1, dans lequel l'écrou à billes (102) comprend des filets (110) espacés axialement d'une première distance (114) et dans lequel la butée d'écrou à billes primaire (106) comprend une surface (108) ayant une longueur égale à la première distance, dans lequel en option :
la vis à billes (104) comprend des filets (112) espacés axialement d'une deuxième distance et dans lequel la butée de vis à billes primaire (206) comprend une surface (208) ayant une longueur égale à la deuxième distance.

5. Ensemble de vis à billes selon la revendication 1, dans lequel la butée d'écrou à billes secondaire comprend une piste.

6. Ensemble de vis à billes selon la revendication 3, dans lequel au moins une de :
a) la butée de vis à billes primaire (206) comprend une surface rugueuse ;
b) la butée d'écrou à billes primaire (106) comprend une surface rugueuse.

7. Ensemble de vis à billes selon la revendication 1, dans lequel la butée de vis à billes secondaire se verrouille irréversiblement avec l'écrou à billes.
